(19) Europäisches Patentamt
European Patent Office
Office européen des brevets

(11) **EP 0 900 802 A2**

(12) **EUROPEAN PATENT APPLICATION**

(43) Date of publication:
**10.03.1999 Bulletin 1999/10**

(51) Int Cl.$^6$: **C07F 7/16**

(21) Application number: **98306941.0**

(22) Date of filing: **28.08.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **29.08.1997 JP 249642/97**

(71) Applicant: SHIN-ETSU CHEMICAL CO., LTD.
**Chiyoda-ku Tokyo (JP)**

(72) Inventors:
• **Tsukioka, Kazumasa**
  **2-13-1, Isobe, Annaka-shi, Gunma-ken (JP)**

• **Nakanishi, Tetsuo, c/o Silicone-Electr. Mat. Lab.**
  **Matsuida-machi, Usui-gun, Gunma-ken (JP)**
• **Inukai, Tetsuya, c/o Silicone-Electr. Mat. Lab.**
  **Matsuida-machi, Usui-gun, Gunma-ken (JP)**
• **Nakayama, Hiroshi, c/o Gunma Complex**
  **Annaka-shi, Gunma-ken (JP)**
• **Satoh, Yukinori, c/o Gunma Complex**
  **Annaka-shi, Gunma-ken (JP)**

(74) Representative: **Stoner, Gerard Patrick et al**
  **MEWBURN ELLIS**
  **York House**
  **23 Kingsway**
  **London WC2B 6HP (GB)**

(54) **Preparation of alkylhalosilanes**

(57)    Alkylhalosilanes are prepared by using a fluidized bed reactor having an inlet and an outlet, charging the reactor with a contact mass of metallic silicon powder and copper catalyst, feeding alkyl halide into the reactor whereby the silanes are produced by direct synthesis, and discharging the product gas from the outlet.

The reactor is provided at the outlet with a ceramic filter. As the product gas passes through the filter, contact mass particles entrained therein are collected on the filter. During the progress of reaction, a backwash gas is blown to the filter, thereby feeding the contact mass deposit back to the reactor.

## Description

This invention relates to an improvement in the direct process for preparing alkylhalosilanes by contacting an alkyl halide with a contact mass of metallic silicon and a copper catalyst.

## BACKGROUND

With respect to the synthesis of alkylhalosilanes, Rochow first disclosed in USP 2,380,995 direct synthesis reaction between metallic silicon and an alkyl halide in the presence of a copper catalyst. Since then, there have been reported a number of research works relating to various cocatalysts used in the presence of copper catalyst, various copper catalysts and treatment thereof, reactors, additives admitted during reaction, and the like.

The direct synthesis process involves activating a contact mass comprising metallic silicon and a copper catalyst, and introducing an alkyl halide into the activated contact mass for accomplishing gas-solid direct contact between the metallic silicon and the alkyl halide, thereby producing alkylhalosilanes.

As is well known in the art, fluidized bed reactors are often used for the industrial synthesis of alkylhalosilanes. Key factors in this synthesis process are the selectivity of commercially most useful dialkyldihalosilane and the production rate of alkylhalosilanes.

The selectivity of dialkyldihalosilane is evaluated in terms of the composition of alkylhalosilane product and a T/D ratio. The alkylhalosilane product contains dialkyldihalosilane (D), trialkylhalosilane (M), alkyltrihalosilane (T), and other by-products. Of these, the dialkyldihalosilane is most useful in the industry. Therefore, the higher the content of dialkyldihalosilane in the alkylhalosilane product, the more advantageous is the synthesis process. The T/D ratio is a weight ratio of alkyltrihalosilane (T) to dialkyldihalosilane (D) in the entire alkylhalosilanes produced. A lower T/D ratio is preferred because it indicates a greater content of dialkyldihalosilane. The formation rate of dialkyldihalosilane is represented by a space time yield (STY) which is the weight of crude alkylhalosilanes produced per unit time relative to the weight of metallic silicon held in the reactor. In order to improve the alkylhalosilane composition, T/D ratio and STY value, various research works have been made with a focus on the catalyst and accelerator.

Next, the fluidized bed reactor is considered. Part of the contact mass in the reactor is entrained in the gas mixture containing synthesized alkylhalosilanes and unreacted alkyl halide and carried outside the reactor along with the product gas. This solid-laden gas is passed through a gas-solid separator where it is separated into a gas phase containing the alkylhalosilanes and unreacted alkyl halide and the contact mass containing unreacted metallic silicon. A cyclone of simple structure is commonly used as the separator. However, the cyclone has a collection efficiency of less than 100%, failing to fully separate the solid from the gas and allowing some contact mass powder to be left in the alkylhalosilane crude product.

The residual contact mass powder is separated from the alkylhalosilane product by means of a solid-liquid separator disposed downstream of the cyclone. An exemplary solid-liquid separator is an evaporator. In this separator, the slurry composed of the residual contact mass and alkylhalosilanes is heated whereby only the alkylhalosilanes are evaporated again. By concentrating the slurry in this way, gas-solid separation is carried out.

The thus concentrated slurry is rich in alkylhalosilanes, silicon and copper catalyst. As described in JP-A 101084/1990, this residual slurry is usually discarded after appropriate treatment such as incineration. The disposal of the residual slurry means that useful ingredients including alkylhalosilanes, metallic silicon and copper catalyst are lost. The effective utilization of these ingredients is no longer expected.

Additionally, the step of evaporating the once condensed alkylhalosilanes requires a substantial amount of energy. The installation of the solid-liquid separator requires a considerable investment.

To eliminate the above-described drawbacks, JP-A 176992/1982 discloses a method for purifying an organohalosilane product resulting from the direct synthesis of organohalosilanes. The method involves the step of channeling a gas flow of organohalosilane gas product with contact mass powder entrained therein to a filter vessel having built therein an array of at least one sintered metal filter; the step of passing the organohalosilane gas through the sintered metal filter, during which step the powder deposits on the outside surface of the sintered metal filter, thereby separating the powder from the organohalosilane gas; the step of interrupting the flow of the organohalosilane gas, and admitting a back-flow gas through the filter in a direction opposite to the organohalosilane gas flow, thereby recovering the powder from the filter surface; and the step of removing the powder from the filter vessel.

Japanese Publication of International Patent Application No. 500333/1982 discloses a method involving the steps of taking out of the reactor those particles with a mean particle size of less than 40 microns selected from silicon particles and copper particles, abrading the particles to remove their surface coating, and feeding the particles back to the reactor. JP-A 135710/1982 discloses a method for producing a silicon metal contact mass by analyzing a sample of the contact mass in the reactor for particle size distribution, and separating into a relatively pure first portion and a relatively impure second portion. It is described in these patents that since the silicon fines collected by the cyclone are coated or poisoned as a result of reaction, they are reused after the coating or the poisoned metallic silicon is removed by abrasion or classification. It is not proposed that the silicon fines scattering out of the reactor are reused as the alkylhalosilane source material without any treatment.

The present invention pertains to a new and useful procedure for the preparation of alkylhalosilanes by the commercially advantageous direct process, especially including a novel and effective way of separating scattering contact mass particles from the alkylhalosilane product. This may be done through simple steps and by means of a simple apparatus while achieving good alkylhalosilane composition, T/D ratio and STY value. In the process, alkylhalosilanes of the general formula (1):

$$R_nSiX_{4-n} \qquad (1)$$

wherein R is an alkyl group having 1 to 4 carbon atoms, X is a halogen atom, and letter n is an integer of 0 to 4, are prepared by using a fluidized bed reactor having an inlet for reactant gas and an outlet for product gas, charging the reactor with a contact mass comprising a metallic silicon powder and a copper catalyst, feeding a reactant gas containing an alkyl halide through the feed inlet into the reactor whereby alkylhalosilanes are formed by direct synthesis, and discharging the product gas from the outlet. The outlet of the fluidized bed reactor is provided with a filter (typically a ceramic filter) preferably having a pore size of up to 5 μm. The product gas contains alkylhalosilanes and unreacted alkyl halide as well as part of the contact mass powder of metallic silicon powder and copper catalyst scattering out of the reactor and entrained in the product gas. As the product gas passes through the filter, the contact mass powder of metallic silicon powder and copper catalyst is collected on the filter surface for effecting gas-solid separation. During the progress of reaction, a back-flow gas is blown to the filter against the product gas flow, thereby feeding the contact mass deposit on the filter back to the reactor for reuse.

Therefore, when the alkylhalosilanes are produced by this process, the subsequent steps of gas-solid separation and solid-liquid separation which are usually taken in the prior art processes may be omitted. The step of purifying the alkylhalosilane product can be made highly efficient. Further, quite surprisingly, when the contact mass separated and collected by the filter is directly fed back to the reactor by back washing, the rate of formation of alkylhalosilanes and the selectivity of commercially most useful dialkyldihalosilane can be significantly improved and alkylhalosilanes produced in high yields.

The present invention provides a process for preparing alkylhalosilanes of the general formula (1) defined above, using a fluidized bed reactor having an inlet for reactant gas and an outlet for product gas, comprising the steps of charging the reactor with a contact mass comprising a metallic silicon powder and a copper catalyst, feeding a reactant gas containing an alkyl halide through the inlet into the reactor whereby alkylhalosilanes are produced by direct synthesis, and discharging the product gas from the outlet, characterized in that the fluidized bed reactor is provided at the outlet with a filter whereby as the product gas containing alkylhalosilanes passes through the filter, contact mass particles entrained in the product gas are collected on the filter for effecting gas-solid separation, and during the progress of reaction, a back-flow gas is fed to the filter against the product gas flow, thereby feeding the contact mass deposit on the filter back to the reactor. Preferably, the filter is a ceramic filter and has a mean pore diameter of up to 5 μm.

Briefly stated, the process of the present invention is to prepare alkylhalosilanes through direct synthesis from metallic silicon powder and an alkyl halide in the presence of a copper catalyst, using a fluidized bed reactor having a feed inlet for reactant gas and a delivery outlet for product gas. More particularly, by charging the fluidized bed reactor with a contact mass comprising a metallic silicon powder and a copper catalyst, feeding a reactant gas containing an alkyl halide through the inlet into the reactor whereby the silane is produced by direct synthesis, and discharging the product gas from the outlet, there are produced alkylhalosilanes of the general formula (1):

$$R_nSiX_{4-n} \qquad (1)$$

wherein R is an alkyl group having 1 to 4 carbon atoms, such as methyl, ethyl, butyl or propyl, X is a halogen atom such as chlorine or bromine, and letter n is an integer of 0 to 4.

The metallic silicon powder used herein should preferably have a purity of at least 97% by weight, especially at least 98% by weight.

For the copper catalyst, any form of copper may be used, for example, elemental copper such as copper powder and stamped copper and copper compounds such as cuprous oxide, cupric oxide, and copper halides. The copper catalyst may be loaded in the reactor alone or as an alloy together with metallic silicon powder. The loading of the copper catalyst is preferably about 0.1 to 10 parts, especially about 2 to 8 parts by weight of copper per 100 parts by weight of the metallic silicon powder.

As is well known in the art, an accelerator such as metallic antimony, zinc or tin powder may be used along with the copper catalyst. The accelerator may be used singly as a mixture with copper or as an alloy with copper. The contact mass preferably has a mean particle size of 1 to 150 μm, especially 4 to 100 μm.

Alkyl halides are reacted with metallic silicon to form alkylhalosilanes. Exemplary alkyl halides include methyl chloride, propyl chloride, methyl bromide, and ethyl bromide. Among these, methyl chloride is commercially most useful. Dimethyldichlorosilane prepared using methyl chloride finds numerous applications as a raw material for a variety of silicone resins.

A fluidized bed reactor is used in the alkylhalosilane preparation process of the invention. The fluidized bed reactor has a feed inlet for reactant gas and a delivery outlet for product gas and is optionally equipped with an agitator for helping maintain good fluidization. Also preferably, the reactor is equipped with a condenser and piping for circulating the unreacted alkyl halide gas.

In preparing alkylhalosilanes according to the invention, the reactor is first charged with a contact mass consisting of metallic silicon powder, copper catalyst and optionally accelerator, and preferably heated such that the interior temperature reaches the steady reaction temperature range, before the alkyl halide is fed into the reactor. It is also advisable that in the step of heating the contact mass, an inert gas is introduced into the reactor for keeping the contact mass fluidized so that the contact mass may be quickly heated.

The term "steady reaction temperature" designates the temperature of the contact mass in a continuous reactor during the period when reaction of the metallic silicon powder with the alkyl halide proceeds in a steady state, that is, the reaction period excluding the operation starting and ending stages. It is believed that in conventional direct synthesis processes, the steady reaction temperature is in the range of 250°C to 350°C. In the practice of the invention, the steady reaction temperature is preferably regarded to range from 280°C to 300°C.

In the step of heating the contact mass or imparting catalytic activity, an inert gas is used for fluidizing the contact mass in the reactor as mentioned above. The inert gas used herein includes argon and nitrogen, with the nitrogen being preferred for economy. It is preferred to flow the inert gas in a circulating manner in order to eliminate any loss of the inert gas.

After the contact mass is given catalytic activity as mentioned above, the alkyl halide is admitted through the inlet into the reactor where gas-solid contact reaction takes place between the alkyl halide and metallic silicon.

Desirably the alkyl halide reactant is previously heated and gasified before it is fed into the reactor. The alkyl halide gas may be used alone or in admixture with an inert gas such as nitrogen or argon. The flow rate of alkyl halide may be above the theoretical amount necessary to form alkylhalosilanes and above the flow rate (combined with the inert gas) necessary to fluidize the contact mass in the reactor.

The contact reaction may be carried out under the same conditions as in well-known processes while the pressure in the reactor is preferably from 1 to 10 atmospheres. In the process of the invention, the inert gas and unreacted alkyl halide gas discharged out of the reactor can be circulated for reuse. Reaction can be continued by replenishing the contact mass to the reactor in an amount corresponding to the amount of contact mass consumed by reaction.

In the alkylhalosilane preparing process according to the invention, the fluidized bed reactor is provided at the product gas delivery outlet with a filter so that the filter covers the opening of the outlet. As the product gas containing alkylhalosilanes passes through the filter, contact mass particles entrained in the product gas are collected on the surface of the filter for effecting gas-solid separation. During the progress of reaction, a back-flow gas is blown to the filter in a direction opposite to the product gas flow, thereby feeding the contact mass deposit on the filter surface back to the reactor. While the back washing is repeated at suitable intervals, alkylhalosilanes are continuously produced.

The filter used herein may be selected from filters of ceramic materials such as mullite, cordierite and alumina and sintered metals such as stainless steel. In the process of the invention wherein a corrosive gas is used as the reactant and produced, ceramic filters are preferable because of their corrosion resistance. The ceramic filters are also advantageous for economy in that if the filter is clogged with high-boiling products sticking thereto for an extended period of reaction, the filter can be readily regenerated by heat treatment at high temperature for burning off the sticky substances.

One or more filters are disposed at the product gas delivery outlet of the reactor. The provision of the filter(s) at the outlet is effective for separating the metallic silicon-containing contact mass powder tending to leave the reactor from the alkylhalosilane product gas and feeding the powder back to the reactor. It is also possible to install an inner cyclone within the reactor and dispose the filter at the outlet of the inner cyclone so that the contact mass powder which has not been collected by the cyclone may be collected by the filter. This arrangement reduces the collection load on the filter.

The filter used herein should preferably have a mean pore diameter of up to 5 μm, especially 0.2 to 4 μm. By setting the mean pore diameter of the filter at 5 μm or less, the rise of the pressure loss across the filter due to filter clogging is reduced. Then the interval of back washing steps becomes longer, enabling operation for a longer period. If the pore diameter is more than 5 μm, there is usually a greater tendency for contact mass particles to penetrate into pores in the filter, causing earlier clogging.

As the gas mixture containing product alkylhalosilane gases and the contact mass particles entrained thereon reaches the filter, the contact mass particles are collected by the filter to form a powder layer on the filter surface. The product alkylhalosilane gases and unreacted alkyl halide gas pass through the filter, while the contact mass is separated therefrom. The powder layer accumulating on the filter surface gradually increases its thickness, and the pressure loss across the filter increases accordingly. If the pressure loss across the filter increases too much, the pressure in the reactor rises to such an extent as to adversely affect the reaction. To prevent such undesirable rise of the pressure loss, a back-flow gas such as an inert gas or alkyl halide gas is fed to the filter in a direction opposite to the flow of the product gas at suitable intervals or when the pressure loss across the filter reaches a certain level, thereby removing the powder from the filter surface. The powder removed from the filter surface is fed back to the reactor where it participates in reaction again. This is called a back washing step.

The back washing step may be carried out periodically during the reaction process. Preferably the back washing step is carried out when the pressure loss across the filter reaches a certain level (which is below the critical level above which the reaction is adversely affected).

The back washing step may be continued for several tens of seconds. Preferably, the back washing step is carried out by blowing the backwash gas in a pulsative manner because the pulsative injection causes no interference with the reaction within the reactor and is more effective in removing the powder from the filter. It is preferred to preheat the backwash gas to approximately the reaction temperature because any drop of the reactor interior temperature is prevented.

The contact mass removed from the filter by the back washing step is fed back to the reactor. Surprisingly, when most or all of the scattered contact mass is fed back to the reactor, we note improvements in the percent utilization of metallic silicon, the rate of formation of alkylhalosilanes, and the selectivity of dialkyldihalosilane.

Prior proposals to treat the filtered particles to increase their activity, e.g. by abrasion or size-classification, need not be used, i.e. the particles can be fed back directly.

There has been described a process for preparing alkylhalosilanes in which simple steps and means are used to improve the alkylhalosilane composition, T/D ratio and STY value, enabling efficient production of alkylhalosilanes. The invention also enables increasing the percent utilization of metallic silicon, and significantly improving the rate of formation of alkylhalosilanes and the selectivity of dialkyldihalosilane. To improve the selectivity of valuable dialkyldihalosilane, which finds the widest range of application, is very advantageous from the economical standpoint.

EXAMPLE

Examples of the invention are given below by way of illustration and not by way of limitation.

Example 1

A fluidized bed reactor having a diameter of 80 mm and a height of 1,140 mm was equipped at its product gas outlet with a ceramic filter. The ceramic filter was made of cordierite and had a mean pore diameter of 10 to 15 $\mu$m and an effective filtering area of 0.06 m$^2$ (the area of the filter across which the gas passes). It was commercially available under the trade name of Ceralek from Nippon Gaishi K.K. Nitrogen gas was introduced into the reactor at a flow rate of 14.0x10$^{-3}$ m$^3$/min while the reactor was heated until an interior temperature of 290°C was reached.

Next, the reactor was charged with 100 parts by weight of a commercial metallic silicon powder with a purity of 98% and 4 parts by weight of a powder mixture of metallic copper powder, metallic antimony powder and metallic zinc powder, which were fluidized. The powder mixture had a mean particle size of 90 $\mu$m. After 2 hours, the supply of nitrogen gas was interrupted and at the same time, methyl chloride was fed into the reactor to start reaction. At the start of reaction, the pressure loss across the ceramic filter was 200 mmH$_2$O The flow rate of methyl chloride was 19.8x10$^{-3}$ m$^3$/min. During the progress of reaction, the back washing step was carried out at intervals of 10 minutes.

After 4 hours, the supply of methyl chloride was interrupted and the supply of nitrogen gas was restarted. The entirety of the contact mass collected on the ceramic filter was fed back to the reactor. The methylchlorosilane gas produced by reaction and taken out of the reactor was visually ascertained to be clear and free of scattering contact mass particles such as metallic silicon. After 10 minutes, heating was interrupted and the reactor was cooled down. Mixing of scattering contact mass into the product was not found.

The amount of crude methylsilanes produced per unit time during reaction was measured, from which a STY value was calculated. The STY value was 300 kg of crude silanes/(kg of metallic silicon x time). The product was analyzed by gas chromatography, finding that it contained 84.0% by weight of dimethyldichlorosilane and 5.9% by weight of methyltrichlorosilane, corresponding to a T/D ratio of 0.07.

Comparative Example 1

The filter was detached from the fluidized bed reactor used in Example 1 so that metallic silicon might scatter out of the reactor. Except for this change, the reaction was carried out under the same conditions as in Example 1. The methylchlorosilane gas produced by reaction and taken out of the reactor contained solid impurities such as metallic silicon. After 10 minutes, heating was interrupted and the reactor was cooled down.

The average STY value during reaction was 200 kg of silanes/(kg of silicon x time). The crude methylchlorosilane gas contained 80.5% by weight of dimethyldichlorosilane and 6.8% by weight of methyltrichlorosilane, corresponding to a T/D ratio of 0.085. Since the contact mass was suspended in the crude methylchlorosilane product, the crude product was subject to solid-liquid separation by means of a gas-solid separator and a solid-liquid separator. The amount of the solid separated was measured to find that 240 g of the contact mass was contained.

Example 2

The same fluidized bed reactor as used in Example 1 was equipped with a ceramic filter. The ceramic filter was made of alumina and had a mean pore diameter of 0.2 $\mu m$ and an effective filtering area of 0.01 $m^2$. It was commercially available under the trade name of Cefilt from Nippon Gaishi K.K. A powder mixture having a mean particle size of 45 $\mu m$ was used. The flow rate of methyl chloride was $11.3 \times 10^{-3}$ $m^3$/min. Except for these changes, the reaction was carried out under the same conditions as in Example 1. At the start of reaction, the pressure loss across the ceramic filter was 324 mm$H_2$O During the progress of reaction, the back washing step was carried out at intervals of 45 minutes. The entirety of the contact mass collected on the ceramic filter was fed back to the reactor. The methylchlorosilane gas produced by reaction and discharged out of the reactor was visually ascertained to be clear and free of solid impurities such as metallic silicon. After 10 minutes, heating was interrupted and the reactor was cooled down. When the reactor interior reached room temperature, the reactor was opened and the unreacted metallic silicon-containing contact mass left in the reactor was taken out.

The amount of crude methylsilanes produced per unit time during reaction was measured, from which a STY value was calculated. The average STY value throughout the reaction was 215 kg of crude silanes/(kg of metallic silicon x time). The product was analyzed by gas chromatography, finding that it contained 86.0% by weight of dimethyldichlorosilane and 6% by weight of methyltrichlorosilane, corresponding to a T/D ratio of 0.07.

Japanese Patent Application No. 249642/1997 is incorporated herein by reference.

Although some preferred embodiments have been described, many modifications and variations may be made thereto in the light of the above teachings. It is therefore to be understood that within the scope of the appended claims, the invention may be practiced otherwise than as specifically described.

**Claims**

1. A process for preparing alkylhalosilanes of the general formula (1):

$$R_n SiX_{4-n} \qquad (1)$$

wherein R is an alkyl group having 1 to 4 carbon atoms, X is a halogen atom, and letter n is an integer of 0 to 4, using a fluidized bed reactor having an inlet for reactant gas and an outlet for product gas, comprising the steps of charging the reactor with a contact mass comprising a metallic silicon powder and a copper catalyst, feeding a reactant gas containing an alkyl halide through the inlet into the reactor whereby alkylhalosilanes are produced by direct synthesis, and discharging the product gas from the outlet, characterized in that

the fluidized bed reactor is provided at the outlet with a filter whereby as the product gas containing alkylhalosilanes passes through the filter, contact mass particles entrained in the product gas are collected on the filter for effecting gas-solid separation, and
during the progress of reaction, a back-flow gas is fed to the filter against the product gas flow, thereby removing the contact mass deposit from the filter, said deposit being fed back to the reactor.

2. The process of claim 1 wherein said filter is a ceramic filter.

3. The process of claim 1 wherein said filter has a mean pore diameter of up to 5 $\mu m$.